Europäisches Patentamt

**European Patent Office**

**Office européen des brevets**

(11) Publication number: **0 053 502**
**A1**

(12) **EUROPEAN PATENT APPLICATION**

(21) Application number: **81305638.9**

(22) Date of filing: **27.11.81**

(51) Int. Cl.³: **F 16 F 1/04,** F 16 F 15/04,
F 16 F 15/12, F 16 D 3/56

(30) Priority: **28.11.80 JP 166649/80**

(43) Date of publication of application: **09.06.82**
**Bulletin 82/23**

(84) Designated Contracting States: **DE FR GB**

(71) Applicant: **Ishiguro, Yasunosuke, 1639, Nishiterao-Cho Kanagawa-Ku, Yokohama City (JP)**

(72) Inventor: **Ishiguro, Yasunosuke, 1639, Nishiterao-Cho Kanagawa-Ku, Yokohama City (JP)**

(74) Representative: **Smith, Geoffrey Leonard et al, Marks & Clerk 57/60 Lincoln's Inn Fields, London WC2A 3LS (GB)**

(54) **Resilient device.**

(57) A resilient device is disclosed for use in a wide variety of applications to absorb particularly vibration and shock loads. The device comprises a cylindrical stack (2) formed of a plurality of resilient rings (1) arranged in series, a pair of load supporting members (3) spaced in opposition for holding said cylindrical stack (2) therebetween, and means (7) for restricting axial movement of the resilient rings (1), whereby the rings (1) deform resiliently in their diametrical direction by compression force (F) applied between the supporting members (4) so as to absorb energy of vibration and shock to be transmitted between said supporting members (4).

Title:- <u>RESILIENT DEVICE</u>

The present invention relates to a resilient device for damping vibration and shock.

Heretofore, springs are usually used for such a resilient device, but springs having high compression resistant force are so large that the provision of an adequate mounting space may present problems.

An object of the present invention is to provide a resilient device having a high compression resistant force with small size and adapted to incorporate easily into a structure for damping vibration and shock transmitted therethrough.

According to the invention there is provided a resilient device comprising a cylindrical stack formed from a plurality of resilient rings arranged in series, and a pair of load supporting members spaced opposingly from each other for holding said cylindrical stack between the supporting members and for preventing substantial movement of the resilient rings in the axial direction, whereby the rings deform resiliently in their diametrical direction by compression force subjected between the supporting members so as to absorb energy of vibration and shock to be transmitted between said supporting members.

The invention will be described in greater detail with reference to the accompanying drawings, wherein:

Figure 1 is an elevational view partly in section of an embodiment of the resilient device according to the invention:

Figure 2 is a vertical sectional view taken through Figure 1:

Figure 3 is a view similar to Figure 2 showing another embodiment of the resilient device according to the invention:

Figure 4 is a plan view partly in section of an embodiment using the resilient device according to the invention for a machine frame;

Figure 5 is an elevational view partly in section taken on line V-V of Figure 4:

Figure 6 is a vertical sectional view, taken on the line VI-VI of Figure 7 of an embodiment using the resilient device according to the invention for a resilient rotary shaft coupling:

Figure 7 is a vertical sectional view taken on the VII-VII of Figure 6:

Figure 8 is an elevational view partly in section of an embodiment using the resilient device according to the invention for a resilient wheel;

Figure 9 is a side view partly in section of the resilient wheel of Figure 8;

Figure 10 is an enlarged detailed vertical sectional view of a portion shown in Figure 9;

Figure 11 is an enlarged vertical sectional view of a cylindrical stack shown in Figure 10;

Figure 12 is an elevational view partly in section taken on line XII-XII of Figure 13 of an embodiment using the resilient device according to the invention for a pin type bridge supporting apparatus;

Figure 13 is a side view partly in section taken on line XIII-XIII of Figure 12; and

Figure 14 is an enlarged elevational view of the cylindrical stack shown in Figure 13.

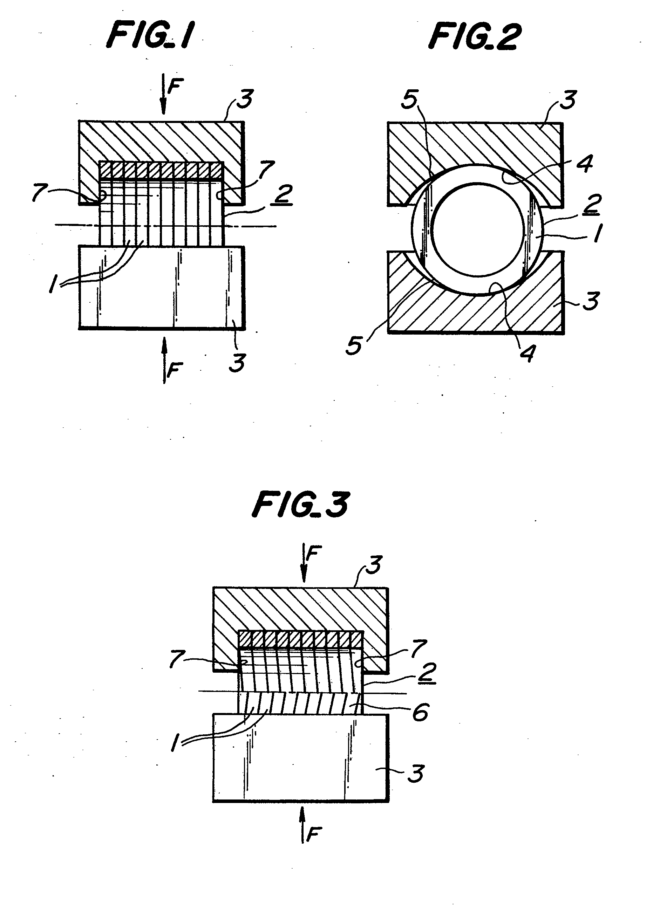

Figures 1 and 2 show an embodiment of the present invention. As shown in Figure 1, a plurality of resilient rings 1 made of spring steel are closely arranged one behind another in series to form a cylindrical stack 2 which is held between upper and

lower load supporting members 3, 3.

The upper and lower load supporting members 3, 3 are spaced from each other and are provided on the opposed surface thereof with grooves or recesses 4, 4, respectively, having substantially semi-circular cross-section so as to receive the diametrically opposite upper and lower portions 5, 5 of the cylinderical stack 2, respectively.

Furthermore, the load supporting member 3 is provided with opposed end walls 7, 7 which engage the opposite ends of the cylindrical stack 2, respectively, so as to hold the rings 1 of the cylindrical stack 2 in closed relationship between the end walls to prevent the rings from moving in the axial direction of the cylindrical stack.

The radius of curvature of the inner curved surface of the recess 4 is larger than the radius of the ring 1 to permit elastic deformation of the ring 1 from circular shape into quasi-elliptical shape by compression force F applied between the upper and lower load supporting members by the vibration and/or shock originated at the side of one of the supporting members and thereby able to absorb or reduce the vibration and the shock.

Figure 3 shows another embodiment of the present invention, wherein the cylindrical stack 2 is formed in the shape of a coil spring 6 by spirally connecting serially a plurality of rings 1 arranged in series. In this embodiment, a coil spring having a rectangular section as shown may be used. Alternatively, a conventional spring having circular section may also be used. In case of use of a circular section spring, the outer surface of the cylindrical stack should be ground to have a straight outline in order to protect the inner surface of the recess 4 from damage as a result of line contact with the rigid surface of the cylindrical stack. The opposite ends of the cylindrical stack of the coil spring may also be ground into flat shape so as to closely contact with the end walls 7 of the recess 4.

The resilient device according to the invention has the necessary high stiffness with small dimension and light weight so that it easily can be incorporated into various structures to be damped against vibration and/or shock such as presses, hammer machines, vehicles and the other.

As mentioned above, the cylindrical stack can be formed by a plurality of separated rings arranged in series or spirally integrally connected rings, but the former is suitable for long life because the damping effect is not significantly adversely affected even if one of the rings is cracked.

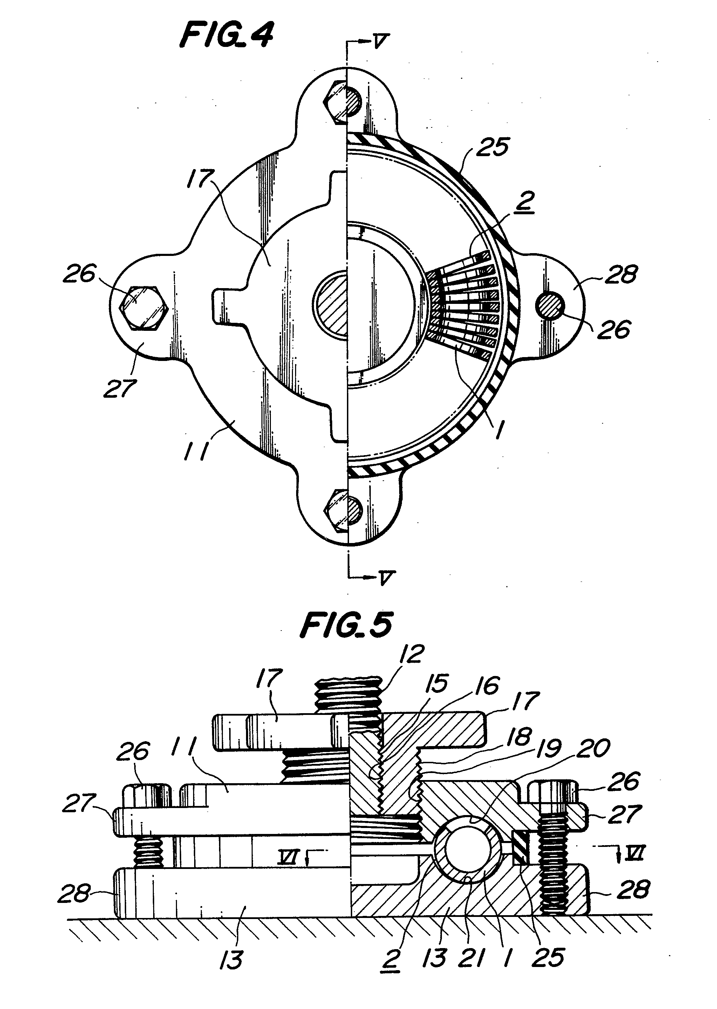

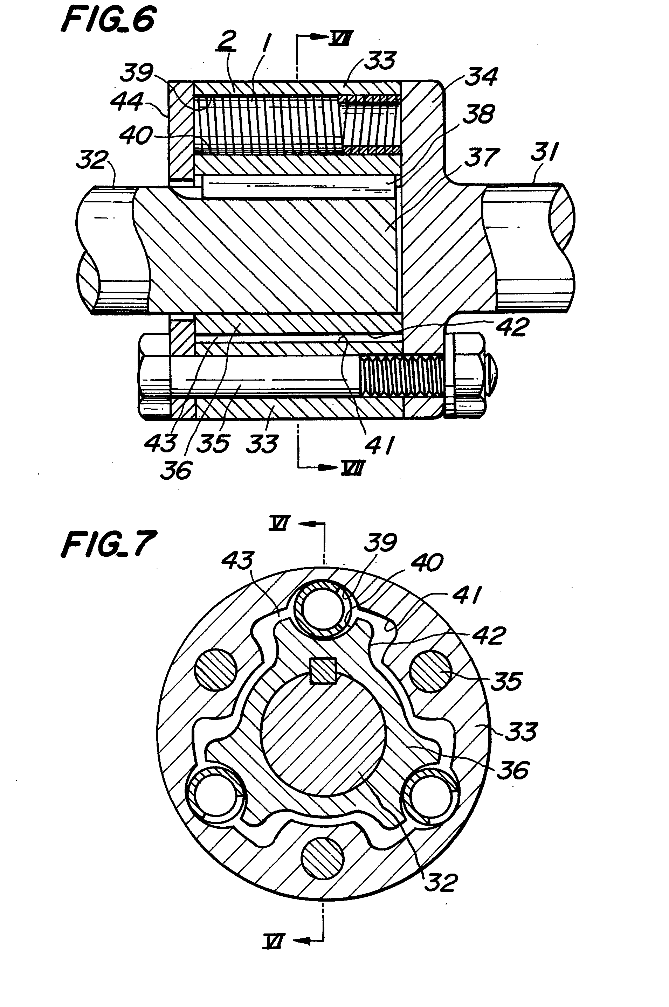

Figures 4 and 5 show an embodiment using the resilient device according to the present invention for a machine frame.

In Figures 4 and 5, 11 designates an upper frame support plate connected rigidly to the lower end of a machine foot 12, and 13 designates a lower frame support plate supported on a foundation or a base 14. The foot 12 has a threaded portion 15 which is threadedly engaged with an inner thread 16 of an adjusting nut 17. This nut has an outer thread 18 screwed into a threaded central opening 19 in the upper frame support plate 11 so that the upper frame support plate 11 is rigidly connected to the lower end of the foot 12.

The upper and lower frame support plates 11 and 13 have annular recesses or grooves 20 and 21 respectively, having substantially semi-circular cross-section at registered positions on the opposing surfaces of the upper and lower frame support plates 11 and 13 respectively. The cylindrical stack 2 is formed in the shape of an annular coil spring by spirally connecting a plurality of metal rings 1 and is positioned in the upper and lower annular grooves 20 and 21 to be interposed between the upper and lower frame support plates 11 and 12 so as to leave a gap 24 therebetween.

This gap 24 is sealed by means of sealing means 25 at the outer peripheral surfaces of the support plates 11 and 13. The upper and lower frame support plates 11 and 13 are securely connected by means of bolts 26 extending through lugs 27 and 28 formed integrally with the support plate, respectively.

Figures 6 and 7 show an embodiment using the resilient device according to the present invention for a resilient rotary shaft coupling.

In Figures 6 and 7, 31 and 32 designate shafts to be connected to each other by means of the coupling. The driving shaft 31 has a cylindrical or ring shaped outer torque transmitting member 33 secured to a flanged end 34 of shaft 31 by means of bolts 35. The driven shaft 32 has a cylindrical or ring shaped inner torque transmitting member 36 secured to the shaft end 37 by means of a fixed key 38. The inner and outer torque transmitting members have a plurality of registered grooves 39 and 40 formed and spaced peripherally on the opposed surfaces, i.e. the inner surface 41 of the outer torque transmitting member 33 and the outer surface 42 of the inner torque transmitting member 36, respectively. The opposed surfaces 41 and 42 are spaced from each other by a gap 43. Each of the grooves 39 and 40 has a substantially semi-circular cross section and extends in an axial direction so as to define cylindrical spaces or bores between each pair of registered grooves 39 and 40.

The cylindrical stacks 2 formed in the shape of coil spring comprising a plurality of resilient metal rings 1 are positioned in the cylindrical bores, respectively, to provide the cylindrical stacks 2 between the outer and inner torque transmitting members 33 and 36 and retained in the cylindrical bores by means of bolts 35 and end plate 44 so as to restrict any movement of the metal rings 1 in the axial direction.

According to the construction of the rotary shaft coupling mentioned above, any vibration and shock generated in the side of the driving shaft or the driven shaft is absorbed and damped by resilient deforming of the metal rings in the diametrical direction.

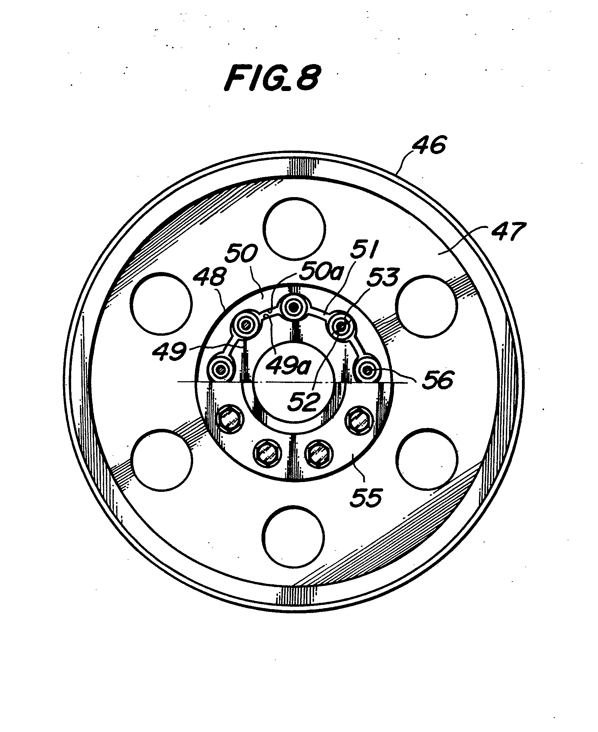

Figures 8 to 11 show an embodiment using the resilient device according to the present invention for a resilient wheel of a railway vehicle.

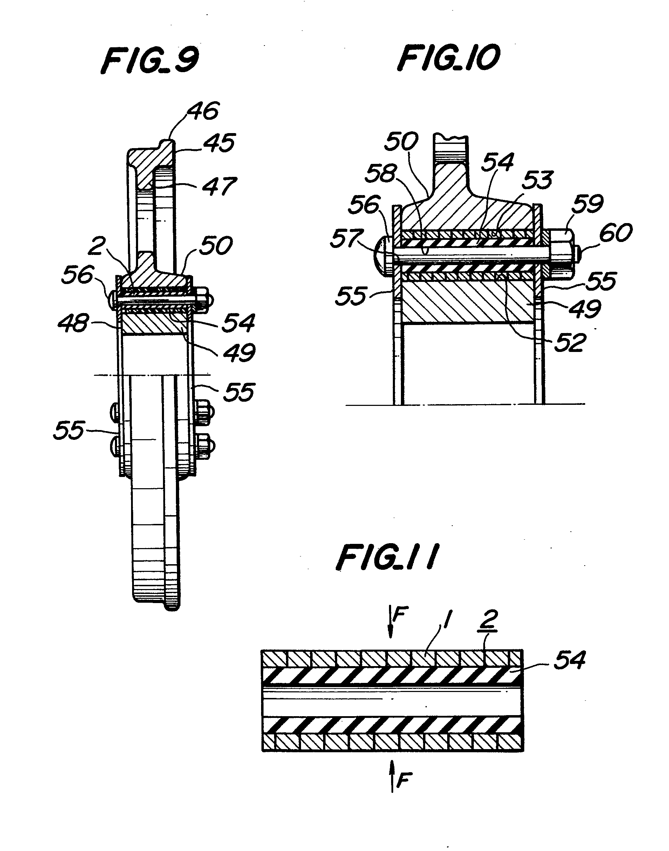

As shown in Figures 8 to 11, the resilient wheel includes a tyre 45, a wheel flange 46, a spoke 47 and a hub 48. The hub 48 is composed of an inner hub portion 49 and an outer hub portion 50. The inner and outer hub portions 49 and 50 are spaced concentrically by a gap 51 and the opposing surfaces of the hub portions, i.e. the outer peripheral surface 49a of the inner hub portion 49 and the inner peripheral surface 50a of the outer hub portion 50 are provided with a plurality of recesses or grooves 52 and 53 respectively, extending in the direction of the hub width and being spaced from each other in the peripheral direction. Each pair of registered grooves 52 and 53 in the inner and outer hub portions defines a cylindrical space, in which the cylindrical stack 2 formed by the resilient metal rings 1 arranged in series is inserted. The clindrical stack 2 may be formed in the shape of coil spring by spirally and serially connecting a plurality of rings 1 as shown in Figure 11.

A sleeve 54 made of oil resistant rubber is inserted into the metal rings of the cylindrical stack. Ring plates 55 are secured to the opposite end faces of the inner and outer hub portions 49 and 50 by means of bolts 56 extending through holes 57 in the ring plates 55 and the central bores 58 of the sleeves 54 so as to closely retain the metal rings 1 of the cylindrical stack 2 in the registered grooves 52 and 53 by securing nuts 59 on the extended ends 60 of the bolts 55.

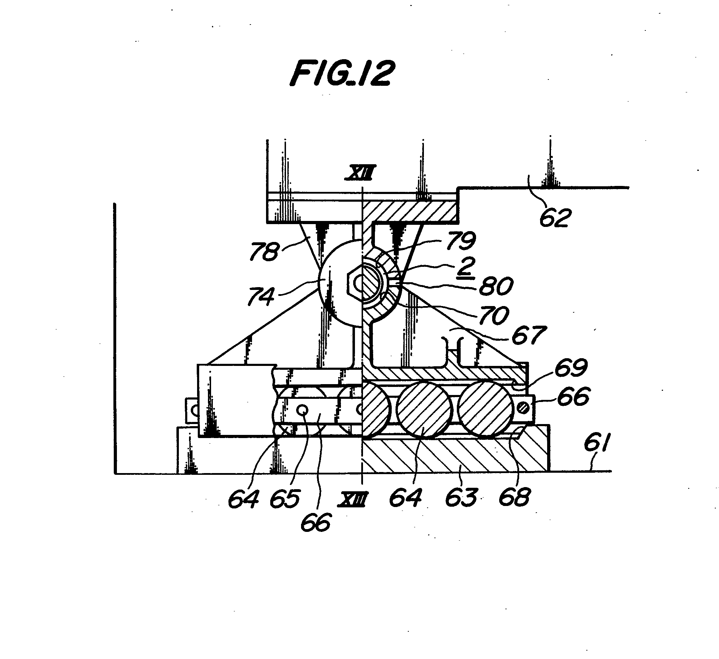

Figures 12 to 14 show an embodiment using the resilient device according to the present invention for a pin type bridge supporting apparatus.

In the drawings, 61 designates a bridge lower structure and 62 designates a bridge upper structure. A roller supporting plate 63 is securely mounted on the lower structure 61 in the conventional manner and a plurality of rollers 64 are arranged on the supporting plate 63 and rotatably supported at their rotating shafts 65 on a frame 66. The rollers 64 support a lower shoe 67 which is translated within a range limited by stops 68 at the ends of the supporting plate 63 and stops 69 at the ends of the lower shoe 67.

The lower shoe 67 is provided at the top thereof with a semi-cylindrical lower pinning groove 70 in which a plurality of resilient metal rings 1 are closedly arranged in series to form a cylindrical stack 2.

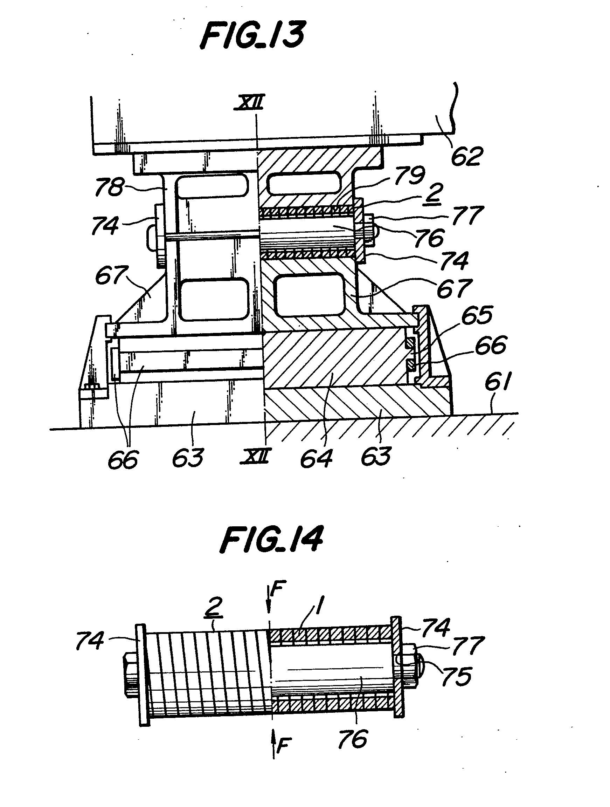

Figure 14 shows an embodiment of the cylindrical stack 2, wherein the stack is formed in the shape of a coil spring having a rectangular section by spirally connecting a plurality of resilient metal rings 1 and held between end plates 74, 74 which are rigidly connected by means of a bolt 76 and a nut 77.

The cylindrical stack 2 positioned in the lower pinning groove 70 mentioned above, supports an upper shoe 78 having at the lower end thereof a semi-cylindrical upper pinning groove 79 which receives the upper portion of the cylindrical stack 2. The lower and upper pinning grooves 70 and 79 hold the cylindrical stack 2 therebetween with a gap 80 so as to permit a pivotal movement of the upper shoe 78 respect to the lower shoe 67.

# CLAIMS

1. A resilient device characterised by comprising a cylindrical stack (2) formed from a plurality of resilient rings (1) arranged in series, a pair of load supporting members (3) spaced opposingly from each other for holding said cylindrical stack (2) between said supporting members (3), and means (7) for restricting axial movement of the resilient rings (1).

2. A device according to claim 1, charactrised in that said cylindrical stack (2) is formed as a coil spring by spirally connecting said rings (1).

3. A device according to claim 1, characterised in that said cylindrical stack (2) is of annular shape.

4. A device according to any of claims 1 to 3, characterised in that said load supporting members (3) are provided with grooves (4), respectively, for receiving the opposed portions (5) of the cylindrical stack (2).

5. A device according to claim 4, characterised in that either or both of said grooves (4) has a radius of curvature larger than the radius of said cylindrical stack (2).

## FIG.1

F
7
3
7
2
1
3

## FIG.2

5
3
4
2
1
3
5
4

## FIG.3

F
3
7
7
2
6
1
3
F

## FIG.4

## FIG.5

**FIG.6**

**FIG.7**

# FIG.8

FIG_9

FIG_10

FIG_11

# FIG.12

## FIG.13

## FIG.14

| Category | Citation of document with indication, where appropriate, of relevant passages | Relevant to claim |
|---|---|---|
| X | US - A - 2 525 730 (SCHULZE)<br><br>* the whole document * | 1-5 |
| X | US - A - 2 934 297 (MITZL)<br><br>* column 2, line 10 to column 4, line 32; figures 1-6 * | 1-3 |
| X | FR - A - 1 194 804 (INVENTO)<br><br>* the whole document * | 1,2,4, 5 |
| X | GB - A - 850 247 (FAWICK)<br><br>* the whole document * | 1,4 |
| A | GB - A - 581 071 (WILLFORD) | |
| A | GB - A - 474 303 (LINDNER)<br><br>* the whole document * | 1,2,4, 5 |
| A | GB - A - 247 716 (NEVER-STOP TRANSIT)<br><br>* page 3, lines 1-87; figures 1-4 * | 1,2,4 |
| A | FR - 557 253 (Cie. D'APPLICATIONS MECANIQUES) | ./. |

**CLASSIFICATION OF THE APPLICATION (Int. Cl. 3)**

F 16 F   1/04
15/04
15/12
F 16 D   3/56

**TECHNICAL FIELDS SEARCHED (Int.Cl. 3)**

F 16 F
B 60 G

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 04-03-1982 | ESPEEL |

EPO Form 1503.1  06.78

European Patent
Office

**EUROPEAN SEARCH REPORT**

0053502
Application number

EP 81 30 5638

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | DE - C - 649 020 (LINDLER)<br><br>* the whole document *<br><br>------ | 1,4,5 | |
| | | | **TECHNICAL FIELDS SEARCHED (Int. Cl.³)** |

EPO Form 1503.2   06.78